**Europäisches Patentamt**

**European Patent Office**

**Office européen des brevets**

(11) Veröffentlichungsnummer : **0 436 507 A1**

## (12) EUROPÄISCHE PATENTANMELDUNG

(21) Anmeldenummer : **91250002.2**

(22) Anmeldetag : **02.01.91**

(51) Int. Cl.$^5$ : **B65G 61/00**

(30) Priorität : **03.01.90 DE 4000264**

(43) Veröffentlichungstag der Anmeldung :
**10.07.91 Patentblatt 91/28**

(84) Benannte Vertragsstaaten :
**AT BE CH DE ES FR GB GR IT LI NL SE**

(71) Anmelder : **SYSTEM GMBH**
**Monschauer Strasse 1**
**W-4000 Düsseldorf 11 (DE)**

(72) Erfinder : **Tübke, Axel B.**
**Bayernallee 19**
**W-1000 Berlin 19 (DE)**

(74) Vertreter : **Christiansen, Henning, Dipl.-Ing.**
**Patentanwalt CHRISTIANSEN Pacelliallee**
**43/45**
**W-1000 Berlin 33 (DE)**

(54) **Verfahren zum Fördern von Paletten.**

(57)    Verfahren zum horizontalen und vertikalen Fördern, insbesondere zum Stapeln und Vereinzeln, von Paletten zwischen einer Vorratsposition, in der fortlaufend eine Palette vorgesehen ist, und einer Be- bzw. Entladeposition, in der, vorzugsweise stapelbare, Güter auf die Palette beladen oder von dieser entladen werden, wobei die Paletten mittels horizontal schwenkbarer Eingriffsmittel ergriffen, gefördert und abgelegt werden, mit folgenden Verfahrensschritte für den Beladevorgang :

Ergreifen der Palette (20, 201) durch die Eingriffsmittel (21) in der eine Aufnahmeposition (33) bildende Vorratsposition,

horizontales verfahren der die Palette (20, 201) tragenden Eingriffsmittel (21) in die im wesentlichen in der Höhe der Vorratsposition angeordneten, eine Ablageposition (34) (34) bildende Beladeposition,

Lösen der Eingriffsmittel (21) aus der Palette (20, 201), so daß die Palette (20, 201) auf einer von den Eingriffsmitteln (21) unabhängig bewegbaren oder feststehenden Ablagefläche aufliegt,

Zurückbewegen der Eingriffsmittel (21) in die Aufnahmeposition,

bzw. für den Entladevorgang sinngemäß in umgekehrter Verfahrensrichtung.

EP 0 436 507 A1

Fig. 1a

Fig. 1b

Fig. 1c

# VERFAHREN ZUM FÖRDERN VON PALETTEN

Die Erfindung betrifft ein Verfahren der im Oberbegriff des Anspruchs 1 angegebenen Art sowie eine Vorrichtung zur Durchführung des Verfahrens.

Derartige Verfahren und eine derartige Vorrichtung sind aus der DE 22 27 447 B2 bekannt. Die Vorrichtung zum Transportieren von stapelbaren Einheiten, insbesondere zum Stapeln und Entstapeln von Paletten, weist dabei einen stationären Förderer und eine oberhalb dessen Abstützebene wirksame Hubvorrichtung mit Lastaufnahmefingern auf. Die Hubvorrichtung ist aus an vertikalen, seitlich des Förderers angeordneten Führungen bewegten Trägern gebildet. Dabei weist jeder Träger einen zur Mittelachse des Förderers verstellbaren horizontalen Ausleger mit Tragarmen auf, in welchem in ihrem Abstand voneinander die veränderbaren Lastaufnahmefinger eingegliedert sind, welche längsseitig oder stirnseitig gegen die Palette horizontal einschwenkbar sind.

Die bekannte Vorrichtung stapelt dabei die ankommenden Paletten derart, daß die Palette zunächst ergriffen und dann um die Palettenhöhe angehoben wird, so daß die auf dem Förderer nächstfolgende Palette die Position der vorhergehenden einnehmen kann. Anschließend wird die zuerst ergriffene Palette auf die auf dem Förderer liegende Palette abgelegt; die Vorrichtung mit den Eingriffsmitteln senkt sich dann ab und ergreift die unterste Palette; diese wird nun wieder angehoben, so daß die nächste Palette unter die angehobene Palette befördert werden kann. Der Vorgang wiederholt sich entsprechend der gewünschten Palettenstapelhöhe. Die Paletten werden durch eine Umkehrung des Verfahrens wieder auf die Fördervorrichtung gesetzt und für den Weitertransport auf den Förderer freigegeben. Auf dem Förderer kann die Palette beladen werden.

Die bekannten Verfahren und Vorrichtungen haben jedoch den Nachteil, daß nachdem eine Lage auf die auf dem Förderer liegende Palette aufgebracht wurde, ein Palettierungsroboter die Höhe dieser Lage ausgleichen muß, um so den Palettierungsvorgang fortsetzen und die nächste Lage aufbringen zu können. Dies ist nicht nur hinsichtlich der steuerungs-technischen und der konstruktiven Ausbildungen am Palettierungsroboter sehr aufwendig, sondern erhöht auch nachteilig die Umschlagszeiten. Weiterhin ist bei der bekannten Vorrichtung eine zusätzliche Einrichtung nötig, um die beladene Palette auf den stationären Förderer zu setzen bzw. von diesem herunter zu heben. Ein Höhenausgleich ist nicht möglich. Beispielsweise würde durch Schrägstellung des Förderbands zwischen den einzelnen Positionen die Ladung der geförderten Paletten verrutschen. Deshalb ist die bekannte Vorrichtung im wesentlichen nur zum Stapeln und Vereinzeln von Paletten geeigenet sowie für Ladevorgänge nur beschränkt nutzbar.

Der Erfindung liegt die Aufgabe zugrunde, bei einer Vorrichtung der eingangs genannten Gattung die Konstruktion dahingehend zu ändern, daß der Einsatzbereich erweitert und die Möglichkeiten für ein Zusammenwirken mit weiteren Vorrichtungen geschaffen werden. Desweiteren soll das Verfahren dahingehend geändert werden, daß im Zusammenwirken mit weiteren Vorrichtungen zum einen die Palette zur rechten Zeit am rechten Ort ist und zum anderen zwischen den weiteren Vorrichtungen sowie der erfindungsgemäßen Vorrichtung übergeben und transportiert werden kann.

Diese verfahrenstechnische Aufgabe wird mit den kennzeichnenden Merkmalen des Anspruchs 1 und die konstruktive Aufgabe mit den kennzeichnenden Merkmalen des Anspruchs 9 gelöst.

Der Erfindung liegt die Erkenntnis zugrunde, daß durch eine Aufteilung der horizontalen und vertikalen Bewegungs-komponenten, beim Stapeln oder Vereinzeln sowie beim Beladen oder Entladen, in voneinander unabhängig bewegbare Vorrichtungen der Einsatzbereich der Vorrichtungen erweitert und die Umschlagzeiten verringert werden. Eine weitere Erkenntnis liegt darin, daß durch ein horizontales Fördern der Palette mit seitlichen Eingriffsmitteln, die Palette im Eingriff sowohl von unten, durch vertikale Fördervorrichtungen, als auch von oben, durch Beladungsautomaten, zugänglich ist. Dadurch kann, noch während die Eingriffsmittel die Palette halten, der Beladungsvorgang begonnen werden und die vertikale Fördervorrichtung zum Übernehmen der Palette an diese heranfahren. Dies ist sinngemäß in entsprechnd umgekehrter Richtung auch für das Entladen möglich. Ebenso sind Stapel- und Vereinzelungsvorgänge für Paletten mit dem erfindungsgemäßen Prinzip durchführbar.

Als besonders von Vorteil erweisen sich folgende Verfahrensschritte für den Beladevorgang:

Die Palette wird durch die Eingriffsmittel in einer eine Aufnahmeposition bildenden Vorratsposition ergriffen. Anschließend wird diese durch die die Palette tragenden Eingriffsmittel horizontal in die im wesentlichen in der Höhe der Vorratsposition angeordneten, eine Ablageposition bildende Beladeposition verfahren. Die Eingriffsmittel lösen sich nun aus der Palette, so daß die Palette auf einer von den Eingriffsmitteln unabhängig bewegbaren oder feststehenden Ablagefläche aufliegt. Dann werden die Eingriffsmittel in die Aufnahmeposition zurückbewegt.

Für den Entladevorgang ist das eben genannte Verfahren sinngemäß in umgekehrter Richtung anzuwenden.

Durch dieses Verfahren ist die Palette während des horizontalen Transports sowohl von unten, als auch von oben zugänglich, so daß weitere Fördergeräte, während des horizontalen Transports der Palette, bereits in die Beladeposition bzw. Ablageposition, ohne daß sie durch die Vorrichtung behindert werden, heranfahren können. Dadurch werden die Umschlagzeiten in vorteilhafter Weise erheblich reduziert.

Die Palette liegt vor bzw. nach dem horizontalen Verfahren unmittelbar oder mittelbar auf einem vertikal bewegbaren Hubtisch auf und wird in dieser Aufnahmeposition von der Vorrichtung ergriffen. Nachdem die Palette horizontal verfahren wurde, bewegt sich der Hubtisch in vertikaler Richtung um einen vorbestimmten Betrag, so daß in vorteilhafter Weise der Hubtisch jeweils verfahrensgünstig für den kommenden Verfahrensschritt eingestellt wird. Der Aufnahmevorgang, der Ablagevorgang und das horizontale Verfahren der Palette laufen in einer derartigen Höhe ab, in der die Ladefläche der Palette der Ablagefläche einer untersten Lage aufzunehmender Güter entspricht. Dadurch können günstig beladene Paletten unter der Vorrichtung bewegt werden, ohne das horizontale Verfahren zu beeinträchtigen. In der Aufnahme- oder Ablageposition wird die Palette be- bzw. entladen, wobei der Hubtisch, auf dem die Palette unmittelbar aufliegt, jeweils um die Höhe einer Lage eines Ladegutes in vertikaler Richtung bewegt wird, wenn eine Lage entladen bzw. beladen wurde. Bei vorbestimmter Beladung der Palette wird der Hubtisch vollkommen abgesenkt, die beladene Palette von dem Hubtisch wegbefördert und der leere Hubtisch wieder angehoben, während die Vorrichtung die nächste Palette aus der Aufnahmeposition in die Ablageposition verfährt und dann die leere, von den Eingriffsmitteln der Vorrichtung gehaltene Palette beladen wird. Mit Erreichen der Position, in der der Hubtisch aufgenommen werden kann, wird die Palette abgelegt. Nachdem eine entladene Palette in der Aufnahmeposition ergriffen wurde, wird der Hubtisch abgesenkt, eine beladene Palette auf diesen Hubtisch aufgebracht, die Palette durch den Hubtisch in Entladungshöhe gehoben und dann die Palette entladen, während die entladene Palette in die Ablageposition verfahren, dann abgelegt wird und die Eingriffsmittel durch die Vorrichtung wieder in die Aufnahmeposition verfahren werden.

Bei dem erfindungsgemäßen Verfahren werden in vorteilhafter Weise die komplexen Zusammenhänge des Palettierens und des Depalettierens berücksichtigt, so daß für das Verfahren geringe Umschlagzeiten benötigt werden. Es kann dadurch kontinuierlich palettiert bzw. depalettiert werden kann, ohne daß der Roboter sein Palettierungsschema ändern oder aus dem vorherigen Paletierungsbereich bewegt werden muß. Günstig ist weiterhin, daß ein Stapeln und Vereinzeln der Paletten zusätzlich ermöglicht wird.

Als besonders von Vorteil erweist sich auch, die Eingriffsmittel in der Vorrichtung horizontal, entlang der sich über den im wesentlichen horizontalen Verfahrweg erstreckenden Einrichtungsarmen verschieblich auszubilden.

Dabei sind die Eingriffsmittel längsseitig und/oder stirnseitig gegen die Palette einschwenkbar und zum Eingriff in die Palette für das Tragen sowohl einer Palette als auch mindestens eines Teils des zu palettierenden Gutes ausgelegt. Dadurch ist die Palette zum einen horizontal verfahrbar und zum anderen in vorteilhafter Weise von unten und oben für weitere Fördervorrichtungen zugänglich. Die Palette ist hierbei, während die Eingriffsmittel die Palette halten, beladbar, so daß kurze Umschlagzeiten ermöglicht werden.

Die Eingriffsmittel sind mit Lagermitteln verbunden, die verschieblich in der Einrichtung gelagert sind, wobei die Lagermittel wiederum mit einem die Lagermittel bewegenden Antriebsmittel verbunden sind. Die in den Einrichtungsarmen gelagerten Eingriffsmittel sind dabei im Gehäuse in einer Höhe angeordnet, die im wesentlichen der Höhe einer beladenen Palette entspricht. An jeder Endposition des horizontalen Verfahrweges ist ein Hubtisch zur Aufnahme von Paletten so vorgesehen, daß ein Hubtisch für unbeladene Paletten und ein Hubtisch für zu be- bzw. entladende Paletten angeordnet ist. Die Hubtische sind über einen Signalschalter mit der Vorrichtung verbunden, so daß ein Zusammenwirken der Hubtische und der erfindungsgemäßen Vorrichtung in vorteilhafter Weise ermöglicht wird. Die beidseits der zu transportierenden Palette angeordneten Eingriffsmittel sind über das Antriebsmittel miteinander verbunden, so daß durch das Antriebsmittel alle Eingriffsmittel horizontal bewegbar sind. Die horizontalen Bewegungen der Lagerschuhe sind dadurch zusätzlich in einfacher Weise koordiniert.

Diese bevorzugte Ausbildung der Vorrichtung erweist sich als vorteilhaft, da in beliebiger Reihenfolge Stapel horizontal und vertikal förderbar werden. Die Einsatzflexibilität erhöht sich dadurch besonders und zusätzlich sind Transportwege in unterschiedlichen Ebenen möglich. In der erhöhten Position der Vorrichtung werden beispielsweise die leeren Paletten befördert und in der tieferen die beladenen. Weiterhin ist günstig, die Vorrichtung der Erfindung mit bekannten Hubtischen, Paletierungsautomaten, weiteren Fördervorrichtungen und stationären sowie mobilen Gabelstapelvorrichtungen kombinierbar und verknüpfbar auszubilden.

Die Eingriffsmittel sind als winkelförmige Haken zum Eingriff in die Paletten ausgebildet und mindestens um 135° horizontal schwenkbar in den Lagerschuhen gelagert. Durch diese Ausführung der Haken sind die Haken in die bekannten Europaletten seitlich eingreifbar. Die die Eingriffsmittel tragende und führende Einrichtung ist höhenverstellbar ausgebildet ist, so daß die Vorrichtung den unterschiedlichen Beladungshöhen der Paletten anpaßbar ist. Die Einrichtungen und die Eingriffsmittel können dadurch beidseits, parallel der horizontal zu transportierenden Palette angeordnet werden.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen :

Figuren 1a bis 1c eine Draufsicht eines Ausführungsbeispiels der Erfindung, im Zusammenhang mit einem Palettierroboter in einem erfindungsgemäßen Verfahrensabschnitt sowie eine Frontansicht in zwei unterschiedlichen Verfahrensabschnitten,

Figur 2 einen Ausschnitt eines Ausführungsbeispiels der Erfindung in Draufsicht mit aufgeschnittener Palette.

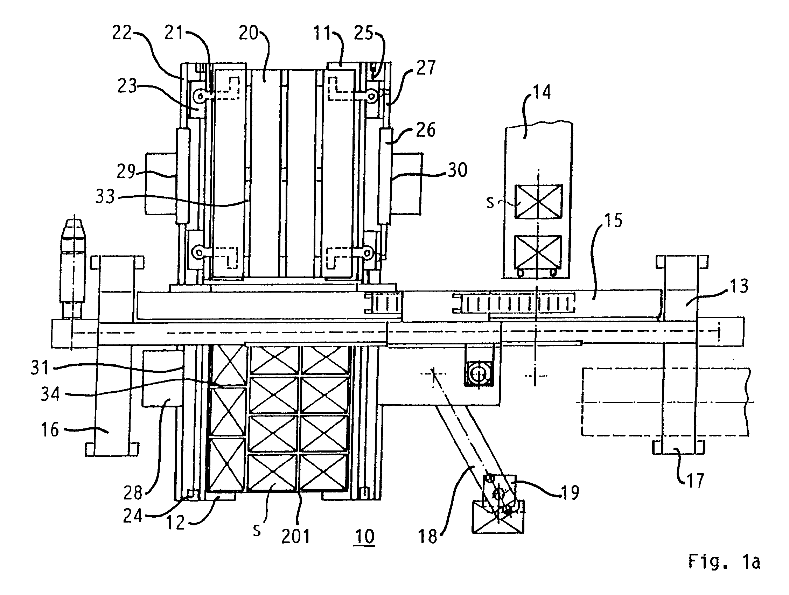

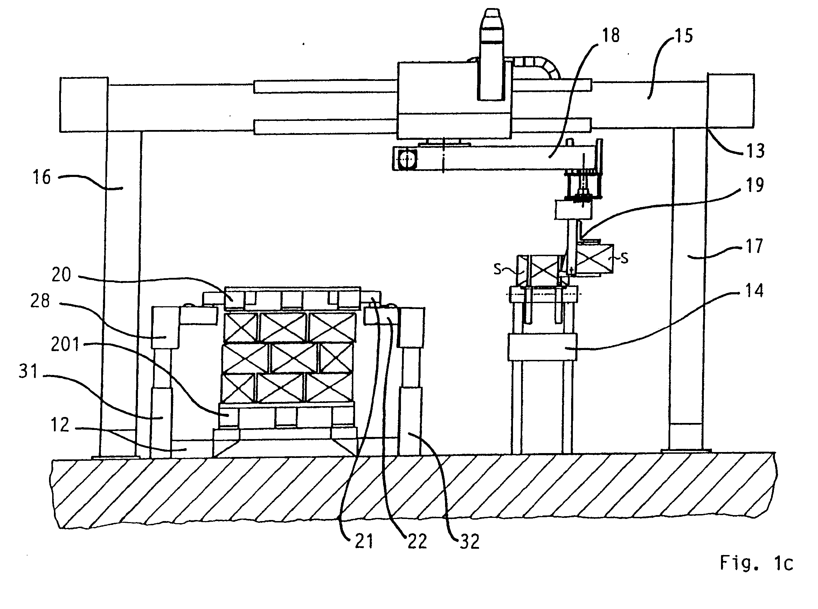

In Figur 1a bis 1c ist in einer Draufsicht sowie in zwei Frontansichten, in unterschiedlichen Zuständen eines Beladungsvorgangs, ein Ausführungsbeispiel der erfindungsgemäßen Vorrichtung 10 im Zusammenwirken mit zwei Hubtischen 11 und 12, einem Palettierroboter 13 sowie einem stationären Förderer 14 dargestellt.

Der Palettierroboter 13 besteht aus einer Traverse 15 und zwei die Traverse 15 tragenden Füße 16 und 17. Auf der Traverse 15 ist ein Greifarm 18 mit einer Greifvorrichtung 19 derart schwenkbar angeordnet, daß dieser mindestens in einem Winkel von 400° drehbar ist. Die Greifvorrichtung 19 ergreift beim Beladevorgang den Stapel S von dem stationären Förderer 14 und schwenkt diesen dann mit dem Greifarm 18 in Richtung auf eine Palette 20, die auf dem Hubtisch 12 der erfindungsgemäßen Vorrichtung 10 aufliegt. Der Greifarm 18 ist sowohl schwenkbar, als auch entlang der Traverse 15 horizontal verfahrbar ausgebildet. Auf diese Weise kann der Greifarm 18 die Greifvorrichtung 19 in einen großen Be- und Entladebereich bewegen.

Horizontal im rechten Winkel zur Traverse 15 des Palettierroboters 13 erstrecken sich Eingriffsmittel 21 tragende Einrichtungsarme 22 der Vorrichtung 10. Die Eingriffsmittel 21 sind jeweils über einen Lagerschuh 23 horizontal, im wesentlichen über die durch die Einrichtungsarme 22 aufgespannte Länge, verfahrbar gelagert. Die Eingriffsmittel 21 sind hakenförmig ausgebildet und mindestens in einem Winkel von über 90° schwenkbar an dem Lagerschuh 23 angelenkt. Die Lagerschuhe 23 sind mit einem Antriebsmittel 24 und ebenso untereinander über eine Kette 25 verbunden. Die Schwenkbewegungen der Eingriffsmittel 21 werden von einem mit den Eingriffsmitteln 21 verbundenen Stellmotor 26 ausgeführt, der eine Welle 27 antreibt, die mit den Eingriffsmitteln 21 verbunden ist. Mit dem Drehen der Welle 27, bewegen sich die Eingriffsmittel 21 in Abhängigkeit der Drehrichtung der Welle 27 winkelförmig einwärts bzw. auswärts. Die Einrichtungsarme 22 sind in einem Gehäuse 28 angeordnet, das über vertikal bewegliche Füße 29 bis 32 auf dem Boden steht.

Die die Eingriffsmittel 21 tragenden Einrichtungsarme 22 sind zueinander parallel auf gleicher Höhe und in einem im wesentlichen der Breite einer Palette 20 entsprechenden Abstand angeordnet. Dadurch sind die Eingriffsmittel 21 seitlich der Palette 20 über die Kette 25 durch das Antriebsmittel 24 anordbar ausgebildet. Das Gehäuse 28 ist dabei derart ausgeführt, daß zwischen den Füßen 29 und 30 bzw 31 und 32 der Vorrichtung 10 je ein Hubtisch 11 bzw. 12 einfügbar sind. Die beiden Hubtische 11 und 12 sind mit der Vorrichtung 10 über einen Signalschalter verbunden, der ein Zusammenwirken und automatisches Abstimmen der Bewegungen Hubtsiche 11 und 12 und der Vorrichtung 10 gewährleistet. Um unterschiedliche Be- und Entladungshöhen ausgleichen zu können, ist das Gehäuse 28 an seinen Füßen 29 bis 32 vertikal verstellbar ausgebildet.

Das kontinuierliche Palettierverfahren mit getaktetem Einspeisen von leeren Paletten 20 aus einem Palettenvorratsmagazin, in Form eines auf einem Hubtisch 11 angeordneten Palettenstapels, läuft in folgenden Verfahrenschritten ab, wobei bereits eine Palette 201 beladen wurde :

Die Eingriffsmittel 21 der Vorrichtung 10 fahren in einer Aufnahmeposition 33 in die Palette 20 ein, die oben auf einem Palettenstapel aufliegt. Die Höhe, in der sich die Palette 20 beim Eingriff befindet, ist größer als die Höhe der zuerst beladenen Palette 201 und entspricht gleichzeitig einer Höhe einer zuerst auf die Palette 20 aufzulegenden Lage Stapel S. Die leere Palette 20 wird horizontal in eine Beladeposition 34 durch die Eingriffsmittel der Vorrichtung 10 verfahren. Währenddessen wird die beladene Palette 201 volkommen abgesenkt. Mit Erreichen der Beladeposition 34 der leeren Palette 20 wird diese durch den Palettierroboter 13 mit Stapeln S nach einem vorbestimmten Palettierungsschema beladen. Die bereits beladene, vollkommen durch den Hubtisch 12 abgesenkte Palette 201 wird dann von dem Hubtisch 12 gehoben. Anschließend hebt sich der Hubtisch 12 wieder bis dieser die noch von den Eingriffsmitteln 21 getragene, im Beladungsvorgang befindliche Palette 20 erreicht hat. Die Eingriffsmittel 21 der Vorrichtung 10 lösen sich nun, so daß dann die Palette 20 auf dem Hubtisch 12 aufliegt. Während der Beladungsvorgang der Palette weiter läuft, werden die Eingriffsmittel 21 in den Einrichtungsarmen 22 aus der Baladungsposition 34 in die Aufnahmeposition 33 zurück verfahren. Beim Beladungsvorgang senkt sich der Hubtisch 12 jeweils um die Höhe einer Lage ab, so daß der Palettierroboter 13 die durch die aufgebrachten Lagen ansteigende Beladungshöhe nicht ausgleichen muß. Der Hubtsich 11 hat inzwischen den Palettenstapel um eine Palettenhöhe angehoben, so daß die nächste Palette 20 durch die Eingriffsmittel 21 ergriffen werden kann.

Durch dieses vorteilhafte Verfahren ist ein kontinuierliches Palettieren möglich, da bereits eine leere Palette 20 beladen werden kann, während die beladene Palette 201 von dem Hubtisch 12 gehoben und wegtransportiert wird. Weiterhin werden mit dem erfindungsgemäßen Verfahren und der erfindungsgemäßen Vorrichtung 10 Beladungsvorgänge ermöglicht, bei denen der Palettierroboter 13 keinen Höhenausgleich aufgrund der steigenden Ladehöhe vornehmen muß. Die Palette 20 wird mit jeder beladenen Lage abgesenkt und bei Bedarf getaktet in den Beladungsvorgang eingespeist, wobei dadurch der Palettenstapel in günstiger Weise vereinzelt wird.

Für den Entladungsvorgang ist das beschriebene Verfahren sinngemäß umzukehren, wobei dadurch ein Stapeln der Paletten 20 sowie ein kontinuierliches Entladen ermöglicht wird. Dabei ergeben sich folgende Verfahrenschritte, nachdem die Palette 20 bis auf eine letzte Lage entladen und von dem Hubtisch 12 in eine Höhe gehoben wurde, die der Höhe einer beladenen Palette 201 beim Entladen der ersten Lage entspricht.

In einer Entladeposition wird die noch von dem Hubtisch 12 getragene Palette 20 durch die Eingriffsmittel 21 während des Entladevorgangs ergriffen. Der Hubtisch 12 wird daraufhin vollkommen abgesenkt, so daß die Eingriffsmittel 21 die Palette 20 tragen. Eine weitere beladene Palette 201 wird nun auf den Hubtisch aufgebracht und, sobald die Palette 20 aus der Entladeposition verfahren wurde, die beladene Palette 201 durch den Hubtisch 12 in die Entladeposition gehoben. Auf diese Weise kann ohne Unterbrechung der Entladungsvorgang fortgesetzt werden. Nachdem die letzte Lage der Palette 20 entladen wurde, wird diese durch die Vorrichtung 10 in Richtung auf einen auf dem Hubtisch 11 aufliegenden Palettenstapel horizontal verfahren. Sobald die Vorrichtung 10 mit der Palette 20 über dem Palettenstapel ist, schwenken die Eingriffsmittel 21 aus der Palette 20 heraus. Die Palette 20 wird dadurch auf den Palettenstapel gelegt. Die Eingriffsmittel 21 werden nun durch die Vorrichtung 10 wieder in die Entladeposition verfahren, so daß die Eingriffsmittel 21, die nach jeder entladenen Lage um die Höhe dieser Lage angehobenen Palette 201, wenn diese für die letzte zu entladenen Lage angehoben wurde, ergreifen können.

Als vorteilhaft erweist sich dieses Verfahren, da auch hier ein kontinuierlicher Ladevorgang, hier Entladungsvorgang, gewährleistet wird. Ein Höhenausgleich durch den Palettierroboter 13 erübrigt sich auch diesmal. Weiterhin können, wie beim Beladevorgang, bekannte Fördervorrichtungen mit der erfindungsgemäßen Vorrichtung 10 verknüpft werden : ein Hubwagen zum Aufbringen der beladenen Palette 201 auf den Hubtisch 12, der Hubtisch 12 für das vertikale Fördern der beladenen Palette 201 sowie ein weiterer Hubtisch 11 für das vertikale Fördern von leeren Paletten 20.

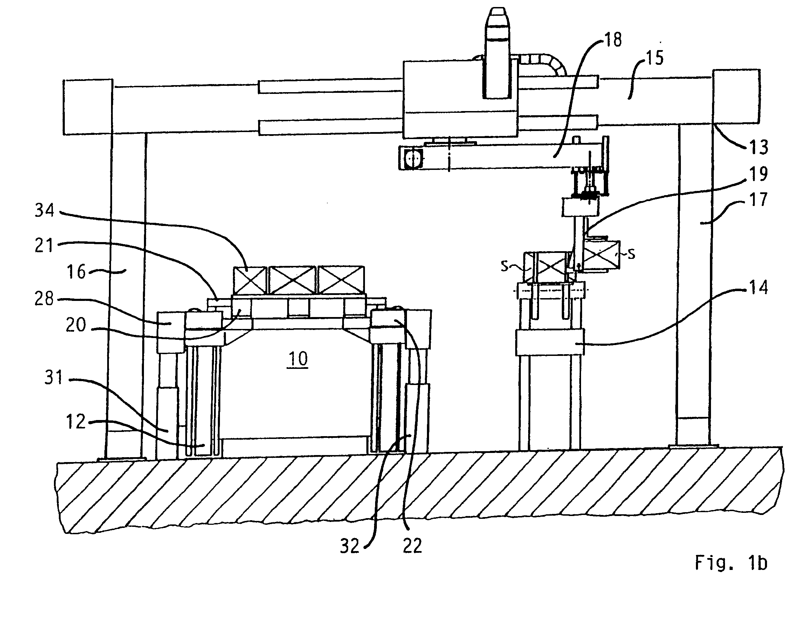

Der Hubtisch 12 ist in Figur 1b derart angehoben dargestellt, daß sich die Palette 20 in einer für die Stapel S aufnehmbaren Beladeposition befindet. Jeweils nachdem eine Lage aufgebracht ist, senkt sich der Hubtisch 12 um die Höhe der durch mehrere auf der Palette 20 in einer Ebene angeordnete Stapel S gebildeten Lage. Das Verfahren entspricht dabei dem bereits beschriebenen, ebenso die weiteren Anordnungen und Vorrichtungen.

Vollkommen abgesenkt ist der Hubtisch 12 in Figur 1c, nachdem die Palette 201 die vorbestimmte Beladungshöhe erreicht hat und der Palettierroboter 13 den letzten Stapel S aufgesetzt hat. Unmittelbar anschließend wird eine leere Palette 20 in die Beladeposition horizontal durch die Eingriffsmittel 21 der Vorrichtung 10 verfahren, so daß dann der Palettierroboter 13 die Stapel S auf die Palette 20 in einem vorbestimmten Palettierschema ohne Unterbrechung aufbringen kann.

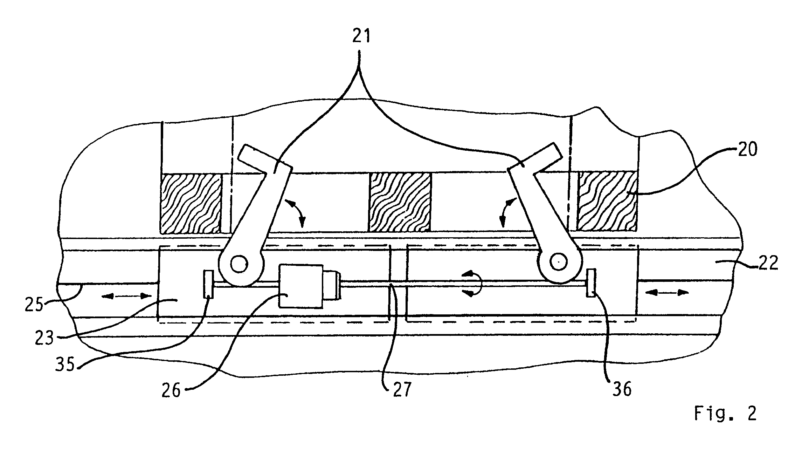

In der Figur 2 ist ein Ausschnitt von den in den Lagerschuhen 23 gelagerten Eingriffsmitteln 21 in Draufsicht, im Eingriff in einer aufgeschnittenen Palette 20 dargestellt.

Die Lagerschuhe 23 sind über die Ketten 25 mit dem Antriebsmittel 24 verbunden sowie in den Einrichtungsarmen 22 horizontal verschieblich geführt. Auf einem Lagerschuh 23 ist der Stellmotor 26 angeordnet. Die Eingriffsmittel 21 und der Stellmotor 26 sind über ein auf der Welle 27 sowie an einem zur Welle weisenden Ende der Eingriffsmittel 21 befindliches Schneckengetriebe miteinander verbunden. Mit dem Drehen der Welle 27 durch den Stellmotor 26 werden die hakenförmigen Eingriffsmittel 21 in die Eingriffsbereiche der Palette 20 hineingedreht bzw. herausgedreht. Die Welle 27 ist zusätzlich noch an ihren Enden in Führungen 35 und 36 gelagert. Die beiden in einem Einrichtungsarm 22 geführten Eingriffsmittel 21 weisen dabei in bezug zueinander entgegengesetzte Drehrichtungen auf. Dies wird durch unterschiedliche Steigungsrichtungen von Zahnflanken des Schneckengetriebes ermöglicht. Die Palette 20 ist horizontal aufgeschnitten dargestellt, so daß eine Ladefläche bildende Bretter der Palette 20 nicht sichtbar sind. Dadurch sind die Eingriffsmöglichkeiten der Eingriffsmittel 21, noch verdeutlicht durch die Bewegungspfeile, erkennbar. Die Bewegungspfeile verdeutlichen weiterhin die Bewegung der Lagerschuhe 23 sowie die der Welle 27.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen.

**Patentansprüche**

1. Verfahren zum horizontalen und vertikalen Fördern, insbesondere zum Stapeln und Vereinzeln, von Paletten zwischen einer Vorratsposition, in der fortlaufend eine Palette vorgesehen ist, und einer Be- bzw. Entladeposition, in der, vorzugsweise stapelbare, Güter auf die Palette beladen oder von dieser entladen werden, wobei die Paletten mittels horizontal schwenkbarer Eingriffsmittel ergriffen, gefördert und abgelegt werden, **gekennzeichnet durch** folgende Verfahrensschritte für den Beladevorgang :
   Ergreifen der Palette (20, 201) durch die Eingriffsmittel (21) in der eine Aufnahmeposition (33) bildende Vorratsposition,
   horizontales Verfahren der die Palette (20, 201) tragenden Eingriffsmittel (21) in die im wesentlichen in der Höhe der Vorratsposition angeordneten, eine Ablageposition (34) (34) bildende Beladeposition,
   Lösen der Eingriffsmittel (21) aus der Palette (20, 201), so daß die Palette (20, 201) auf einer von den Eingriffsmitteln (21) unabhängig bewegbaren oder feststehenden Ablagefläche aufliegt,
   Zurückbewegen der Eingriffsmittel (21) in die Aufnahmeposition,
   bzw. für den Entladevorgang sinngemäß in umgekehrter Verfahrensrichtung.

2. Verfahren nach Anspruch 1, **dadurch gekennzeichnet**, daß die Palette (20, 201) unmittelbar oder mittelbar auf einem vertikal bewegbaren Hubtisch (11, 12) aufliegt, in dieser Aufnahmeposition (33) von den Eingriffsmitteln (21) ergriffen und, nachdem diese Palette (20, 201) horizontal verfahren wurde, der Hubtisch (11, 12) in vertikaler Richtung um einen vorbestimmten Betrag bewegt wird.

3. Verfahren nach einem der Ansprüche 1 bis 2, **dadurch gekennzeichnet**, daß die Palette (20, 201) aus der Aufnahmeposition (33) in eine Ablageposition (34) horizontal verfahren wird, dort mittelbar oder unmittelbar auf einen vertikal bewegbaren Hubtisch (11, 12) abgelegt und der Hubtisch (11, 12) um einen vorbestimmten Betrag bewegt wird.

4. Verfahren nach einem der vorangehenden Ansprüche, **dadurch gekennzeichnet**, daß der Aufnahmevorgang, der Ablagevorgang und das horizontale Verfahren der Palette (20, 201) in einer derartigen Höhe ablaufen, in der die Ladefläche der Palette (20, 201) der Ablagefläche einer untersten Lage aufzunehmender Ladegüter entspricht.

5. Verfahren nach einem der vorangehenden Ansprüche, **dadurch gekennzeichnet**, daß in der Aufnahme- oder Ablageposition (34) die Palette (20, 201) be- bzw. entladen wird, wobei der Hubtisch (11, 12), auf dem die Palette (20, 201) unmittelbar aufliegt, jeweils um die Höhe einer Lage eines Ladegutes in vertikaler Richtung bewegt wird, wenn eine Lage entladen bzw. beladen wurde.

6. Verfahren nach einem der vorangehenden Ansprüche, **dadurch gekennzeichnet**, daß bei vorbestimmter Beladung der Palette (20, 201), der Hubtisch (11, 12) die Palette (20, 201) vollkommen absenkt, die beladene Palette (20, 201) von dem Hubtisch (11, 12) wegbefördert wird und der leere Hubtisch (11, 12) wieder angehoben wird, während die Vorrichtung (10) die nächste Palette (20, 201) aus der Aufnahmeposition (33) in die Ablageposition verfährt und dann die leere, von den Eingriffsmitteln (21) der Vorrichtung (10) gehaltene Palette (20, 201) beladen wird.

7. Verfahren nach Anspruch 6, **dadurch gekennzeichnet**, daß mit Erreichen der Position, in der der Hubtisich (11, 12) eine Palette (20, 201) aufnehmen kann, die Palette (20, 201) abgelegt wird.

8. Verfahren nach einem der Ansprüche 1 bis 5 **dadurch gekennzeichnet**, daß, nachdem eine entladene Palette (20, 201) in der Aufnahmeposition (33) ergriffen wurde, der Hubtisch (11, 12) abgesenkt, eine beladene Palette (20, 201) auf diesen Hubtisch (11, 12) aufgebracht, die Palette (20, 201) durch den Hubtisch (11, 12) in Entladungshöhe gehoben und dann die Palette (20, 201) entladen wird, während die entladene Palette (20, 201) in die Ablageposition (34) verfahren, dann abgelegt wird und die Eingriffsmittel (21) wieder in die Aufnahmeposition (33) verfahren werden.

9. Vorrichtung zum horizontalen und vertikalen Fördern von Paletten und zur Durchführung des Verfahrens nach Anspruch 1, mit horizontal schwenkbaren Eingriffsmitteln zum Ergreifen und Ablegen der Paletten und einem die Eingriffsmittel haltende Einrichtungsarme tragenden Gehäuse, wobei die Eingriffsmittel verfahrbar in den sich über den Verfahrweg erstreckenden Einrichtungsarmen gelagert sind, **dadurch gekennzeichnet**, daß die Eingriffsmittel (21) in der Vorrichtung (10) horizontal, entlang der sich über den im wesentlichen horizontalen Verfahrweg erstreckenden Einrichtungsarme (22) verfahrbar angeordnet sind.

10. Vorrichtung nach Anspruch 9, **dadurch gekenn-**

zeichnet, daß die Eingriffsmittel (21) längsseitig und/oder stirnseitig gegen die Palette (20, 201) einschwenkbar sind.

11. Vorrichtung nach einem der Ansprüche 9 und 10, **dadurch gekennzeichnet,** daß die Eingriffsmittel (21) zum Eingriff in die Palette (20, 201) für das Tragen sowohl einer Palette (20, 201) als auch mindestens eines Teils des zu palettierenden Gutes ausgelegt sind.

12. Vorrichtung nach einem der Ansprüche 9 bis 11, **dadurch gekennzeichnet,** daß die Eingriffsmittel (21) mit Lagermitteln verbunden sind, die verschieblich in den Einrichtungsarmen (22) gelagert sind,

13. Vorrichtung nach Anspruch 12, **dadurch gekennzeichnet,** daß die Lagermittel mit einem Antriebsmittel (24) verbunden sind.

14. Vorrichtung nach einem der Ansprüche 9 bis 13, **dadurch gekennzeichnet,** daß die in den Einrichtungsarmen (22) gelagerten Eingriffsmittel (21) im Gehäuse (28) in einer Höhe angeordnet sind, die im wesentlichen der Höhe der beladenen Palette (20, 201) entspricht.

15. Vorrichtung nach einem der Ansprüche 9 bis 14, **dadurch gekennzeichnet,** daß ein Hubtisch (11, 12) zur Aufnahme von Paletten (20, 201) unterhalb einer Endposition des horizontalen Verfahrweges vorgesehen ist und über einen Signalschalter mit der Vorrichtung (10) verbunden ist, so daß ein Zusammenwirken der Bewegungen des Hubtisches (11, 12) und der Vorrichtung (10) ermöglicht wird.

16. Vorrichtung nach Anspruch 15, **dadurch gekennzeichnet,** daß an jeder Endposition des horizontalen Verfahrweges ein Hubtisch (11, 12) zur Aufnahme von Paletten (20, 201) angeordnet ist, wobei ein Hubtisch (11, 12) für unbeladene Paletten (20, 201) und ein Hubtisch (11, 12) für zu beladende bzw. entladende Paletten (20, 201) vorgesehen sind.

17. Vorrichtung nach einem der Ansprüche 9 bis 16, **dadurch gekennzeichnet,** daß die Eingriffsmittel (21) als winkelförmige Haken zum Eingriff in die Paletten (20, 21) ausgebildet sind.

18. Vorrichtung nach Anspruch 17, **dadurch gekennzeichnet,** daß die Eingriffsmittel (21) mindestens um 135° horizontal schwenkbar gelagert sind.

19. Vorrichtung nach einem der Ansprüche 9 bis 18, **dadurch gekennzeichnet,** daß die die Eingriffsmittel (21) tragenden und führenden Einrichtungsarme (22) höhenverstellbar ausgebildet sind, so daß die Vorrichtung (10) den unterschiedlichen Beladungshöhen der Paletten (20, 201) anpaßbar ist.

20. Vorrichtung nach einem der Ansprüche 9 bis 19, **dadurch gekennzeichnet,** daß die Einrichtungsarme (22) und die Eingriffsmittel (21) beidseits sowie parallel der horizontal zu transportierenden Palette (20, 201) vorgesehen sind.

21. Vorrichtung nach Anspruch 20, **dadurch gekennzeichnet,** daß die Eingriffsmittel (21) über das Antriebsmittel (24) miteinander verbunden sind, so daß durch das Antriebsmittel (24) alle Eingriffsmittel (21) horizontal bewegbar sind.

Fig. 1a

Fig. 1b

EP 0 436 507 A1

Fig. 1c

Fig. 2

Europäisches
Patentamt

**EUROPÄISCHER RECHERCHENBERICHT**

Nummer der Anmeldung

EP 91 25 0002

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0146643 (ICOMA PACKTECHNIK)<br>* das ganze Dokument *<br>--- | 1-9, 11, 15, 16 | B65G61/00 |
| D,A | DE-B-2227447 (HOLSTEIN UND KAPPERT)<br>* Ansprüche 1, 7; Figuren 1-3 *<br><br>----- | 9, 10, 17, 18, 20 | |
| | | | **RECHERCHIERTE SACHGEBIETE (Int. Cl.5 )**<br><br>B65G |

Der vorliegende Recherchenbericht wurde für alle Patentansprüche erstellt

| Recherchenort | Abschlußdatum der Recherche | Prüfer |
|---|---|---|
| BERLIN | 11 APRIL 1991 | SIMON, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes Dokument

EPO FORM 1503 03.82 (P0403)